# FASCICULE DE BREVET EUROPEEN

(11) **EP 1 259 309 B1**
(45) Date de publication et mention de la délivrance du brevet: **10.03.2004**
(21) Numéro de dépôt: 00993693.1
(22) Date de dépôt: 26.12.2000
(51) Int. Cl.: B01D 61/44, B01D 61/52, C02F 1/469

(54) **DISPOSITIF AUTOMATIQUE DE PURIFICATION D'EAU POTABLE**
AUTOMATISIERTE VORRICHTUNG ZUR REINIGUNG VON TRINKWASSER
AUTOMATIC DEVICE FOR PURIFYING DRINKING WATER

(30) Priorité: 03.01.2000 FR 0000098
(43) Date de publication de la demande: 27.11.2002
(73) Titulaire: Bernard, Michel, F-78180 Montigny le Bretonneux (FR); Fahrasmane, Alain, 28130 Bouglainval (FR)
(72) Inventeur: Bernard, Michel, F-78180 Montigny le Bretonneux (FR); Fahrasmane, Alain, 28130 Bouglainval (FR)
(74) Mandataire: de Saint-Palais, Arnaud Marie
(86) Numéro de dépôt international: PCT/FR2000/003682
(87) Numéro de publication internationale: WO 2001/049397

(56) Documents cités:
- DE-A- 4 231 028
- DE-A- 4 418 812
- FR-A- 2 145 755
- GB-A- 2 311 999
- US-A- 5 736 023

## Description

La présente invention concerne un dispositif destiné à purifier l'eau à usage alimentaire.

Elle s'applique notamment, mais non exclusivement, à la purification de l'eau potable distribuée pour la consommation domestique ou collective, avec une capacité de quelques litres à quelques mètres cubes par jour.

Malgré la mise en oeuvre de processus de traitement et de purification, l'eau potable distribuée peut contenir encore des éléments polluants qui induisent des effets plus ou moins gênants en termes d'aspect (matières en suspension), d'odeur et de goût (chlore, composés organiques, ...), de santé (présence de bactéries, calcaire, nitrates, pesticides, composés organiques, métaux lourds, ...).

Il est donc souhaitable de purifier l'eau potable distribuée en réduisant les éléments polluants qu'elle contient, tout en conservant ses oligo-éléments naturels.

Il existe des dispositifs à usage domestique qui éliminent tout ou partie des composés considérés comme des polluants. Les dispositifs les plus courants sont appliqués après le robinet de puisage de l'eau et sont constitués d'éléments absorbants et/ou filtrants, faisant subir à l'eau deux ou trois étapes de traitement. Cependant, ces dispositifs n'éliminent qu'une partie des éléments polluants, et dans certains cas, ils peuvent même émettre de la pollution lorsqu'ils sont utilisés dans de mauvaises conditions, notamment de débit, de saturation ou de température.

D'autres dispositifs connus s'appliquent avant le robinet de puisage, et sont basés sur un système filtrant par osmose inverse qui peut être associé à un prétraitement utilisant des éléments filtrants et absorbants, et éventuellement un post traitement de filtration, de stérilisation et de reminéralisation. Ces dispositifs permettent d'éliminer la majeure partie des éléments considérés comme polluants. Ils présentent toutefois les inconvénients :
- de mettre en oeuvre un grand nombre d'étapes de traitement (5 à 6 étapes).
- de produire une eau quasiment pure chimiquement, et exempte de sels minéraux, ce qui rend nécessaire la mise en oeuvre d'une étape de post traitement de reminéralisation,
- de nécessiter un adoucissement et une déchloration préalable de l'eau à traiter, ce qui rend nécessaire la mise en oeuvre d'une étape de post traitement de désinfection, et
- de présenter un faible rendement, de 1/5 à 1/20 d'eau traitée par rapport à l'eau consommée.

On connaît par ailleurs le procédé d'électrodialyse qui est utilisé dans des applications industrielles de grande capacité, pour la purification de solutions et la déminéralisation ou le dessalement d'eau. Ce procédé consiste à appliquer un champ électrique continu à la solution aqueuse à traiter pour obtenir la migration des espèces ionisées contenues dans la solution. La séparation des espèces ioniques polluantes de la solution pure est réalisée en utilisant :
- des membranes échangeuses d'ions, les unes étant sélectives des cations, et les autres sélectives des anions, la sélectivité ionique de ces membranes pouvant être adaptée à l'extraction d'espèces de charges ioniques plurivalentes et/ou monovalentes, et
- des séparateurs assurant la circulation de l'eau à traiter sur les surfaces des membranes échangeuses.

Il s'avère que dans ce procédé qui se trouve décrit dans le brevet US 5,736,023, les électrodes engendrant le champ électrique et les membranes ont tendance à s'encrasser, les cations alcalino-terreux ayant tendance à précipiter sur la cathode et sur les membranes sélectives des anions.
En outre, ce procédé n'est pas adapté à une mise en oeuvre dans une petite unité de traitement, car une telle miniaturisation implique une réduction des conduits de passage de l'eau dans les différents organes de l'unité d'électrodialyse, et donc un risque accru d'encrassement, et d'obturation de ces conduits.

La présente invention a pour but de supprimer ces inconvénients. A cet effet, elle propose un dispositif de purification de l'eau à usage domestique ou collectif, ce dispositif comportant une unité d'électrodialyse comprenant :
- deux électrodes planes disposées en regard l'une de l'autre, qui sont soumises à une tension continue pour générer entre elles un champ électrique continu,
- une pluralité de membranes échangeuses d'ions disposées entre les électrodes, les unes étant sélectives des ions positifs, et les autres des ions négatifs, et
- une pluralité de cadres séparateurs de membranes, disposés chacun entre deux membranes échangeuses d'ions adjacentes, et permettant le passage de l'eau à traiter sur la surface de ces deux membranes,
- deux cadres séparateurs d'électrode et de membrane, disposés respectivement entre les deux électrodes et les membranes échangeuses d'ions adjacentes, et permettant le passage de l'eau le long des électrodes,
- une conduite de répartition de l'eau à traiter dans les cadres séparateurs, et deux conduites respectives d'extraction d'eau saumâtre et d'eau purifiée des cadres séparateurs,
- des moyens pour envoyer l'eau à traiter exclusivement dans les cadres séparateurs entre deux membranes échangeuses d'ions.

Selon l'invention, ce dispositif est caractérisé en ce que l'unité d'électrodialyse comprend des moyens pour envoyer l'eau purifiée de la conduite d'extraction d'eau purifiée dans les cadres séparateurs d'électrode et de membrane, avant de l'envoyer en sortie de l'unité d'électrodialyse.

Grâce à ces dispositions, en repassant sur l'électrode négative, l'eau purifiée réduit les phénomènes de précipitation qui sont très intenses sur cette électrode à cause de la très faible acidité du milieu environnant. On évite ainsi la nécessité d'un prétraitement d'adoucissement d'eau si l'eau à traiter est très calcaire. En outre, la couche d'eau purifiée (moins alcaline) circulant à la surface des électrodes dont la conductivité est d'autant plus faible que son taux de purification ionique est grand, procure un effet d'autorégulation du courant continu traversant l'unité d'électrodialyse.

Par ailleurs, on peut constater qu'en repassant sur l'électrode positive, l'eau purifiée traverse un milieu fortement oxydant qui a un effet bactéricide et bactériostatique (la population des bactéries n'augmente pas après le traitement). On évite ainsi un post traitement antibactérien.

En supprimant plusieurs étapes de traitement, l'invention permet de réduire sensiblement le coût d'un dispositif de purification d'eau, appliquant le procédé de l'électrodialyse, à tel point que ce procédé peut être mis en oeuvre dans un petit appareil électroménager d'un coût suffisamment faible pour être accessible au grand public.

Selon une particularité de l'invention, le dispositif comprend des moyens pour inverser la polarité appliquée aux électrodes, des moyens pour commander les moyens d'inversion de polarité d'une manière périodique, de manière à ce que les durées respectives des alternances de polarisation positive et des alternances de polarisation négative soient égales, et/ou des moyens d'alimentation en courant continu, de manière à ce que les quantités de courant continu délivrées au système, durant l'une et l'autre des alternances de polarité soient égales, et des moyens d'électrovannes commutés à chaque alternance pour orienter l'eau saumâtre extraite vers la sortie d'eau saumâtre de l'unité d'électrodialyse, et l'eau purifiée dans les cadres séparateurs d'électrode et de membrane, puis vers la sortie d'eau purifiée de l'unité d'électrodialyse.

De cette manière, les ions qui ont précipité dans l'unité d'électrodialyse durant une alternance, sont dissous durant l'alternance suivante du fait de l'inversion de polarité qui transforme en milieu acide, le milieu basique où se sont produites les précipitations.

La durée des alternances de polarité est comprise entre quelques minutes et quelques dizaines de minutes, et de préférence comprise entre deux et dix minutes.

Avantageusement, l'égalité de la durée des alternances de polarité et des quantités de courant continu sont obtenues avec une précision inférieure à ±1 %, de préférence inférieure à ±0,05 %.

On évite ainsi l'encrassement à la longue de l'unité d'électrodialyse.

Un mode de réalisation du dispositif selon l'invention sera décrit ci-après, à titre d'exemple non limitatif, avec référence aux dessins annexés dans lesquels :
La figure 1 représente un schéma de principe d'un dispositif de purification d'eau selon une première variante de réalisation préférée de l'invention ;
La figure 2 représente un schéma de principe d'un dispositif de purification d'eau selon une seconde variante de réalisation préférée de l'invention ;
La figure 3 représente un schéma de principe d'un dispositif de purification d'eau selon une troisième variante de réalisation préférée de l'invention ;
La figure 4 représente en vue éclatée un mode de réalisation préféré d'une unité d'électrodialyse ;
La figure 5 illustre de manière schématique le principe de fonctionnement de l'unité d'électrodialyse montrée sur la figure 4.
Les figures 6, 7 et 8 montrent en détail respectivement un cadre séparateur d'électrode et de membrane, un cadre séparateur de membranes et une membrane, utilisés dans l'unité d'électrodialyse représentée sur la figure 4 ;
La figures 9 montre en détail une variante de réalisation d'un cadre séparateur de membranes, utilisé dans l'unité d'électrodialyse représentée sur la figure 4 ;
La figure 10 est un schéma de principe d'un dispositif de purification d'eau selon une quatrième variante de réalisation préférée de l'invention.

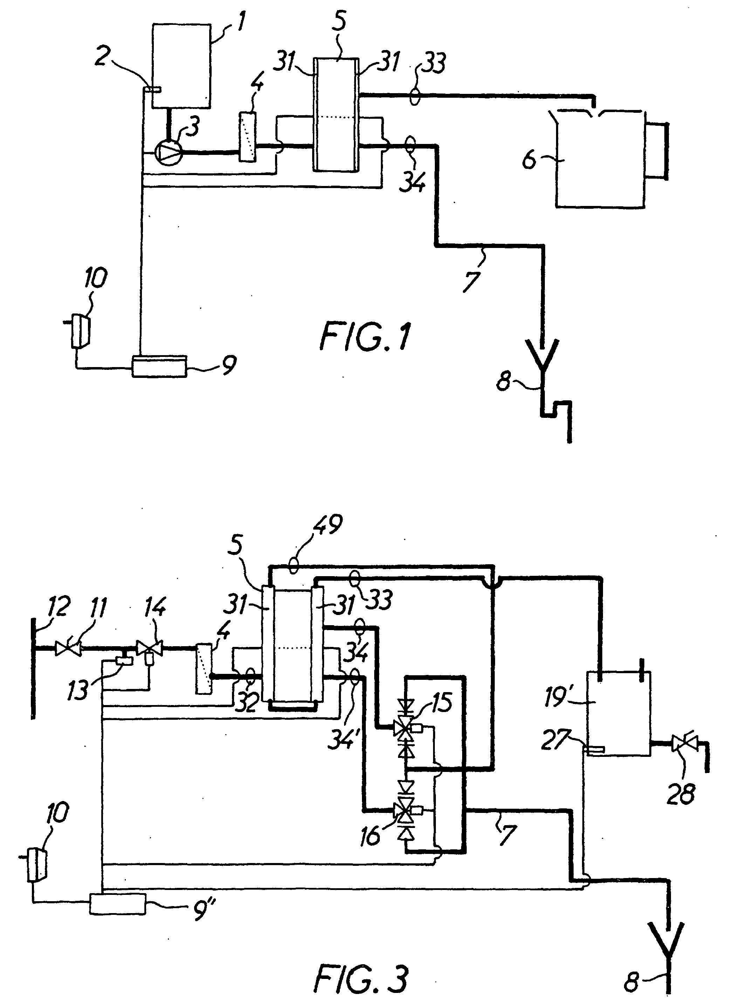

Le dispositif selon l'invention représenté sur la figure 1 consiste en une petite unité de purification d'eau, à usage domestique, non raccordée à un réseau de distribution d'eau potable. Ce dispositif comprend une unité d'électrodialyse 5 raccordée à un réservoir 1 d'eau à traiter, et une pompe 3 qui injecte l'eau du réservoir 1 dans l'unité d'électrodialyse 5. Suivant la qualité de l'eau à traiter, on peut prévoir de disposer une unité de prétraitement 4 entre la pompe et l'unité d'électrodialyse.

L'unité d'électrodialyse 5 comporte une sortie 33 d'eau traitée qui est recueillie dans un réservoir 6 et une sortie 34 d'évacuation d'eau saumâtre contenant les polluants extraits de l'eau traitée, qui peut être raccordée par une conduite 7 à un circuit d'évacuation 8 des eaux usées.
Les réservoirs 1 et 6 sont à la pression atmosphérique, le réservoir 6 étant constitué par une cruche amovible.

La pompe 3 et l'unité d'électrodialyse 5 sont commandées et alimentées en énergie électrique par un organe de commande 9, par exemple muni d'un cordon et d'une prise de raccordement 10 au réseau électrique. Le réservoir 1 comporte un détecteur 2 de niveau d'eau raccordé à l'organe de commande 9 qui est conçu pour arrêter la pompe 3 et l'unité d'électrodialyse 5 lorsque le niveau d'eau dans le réservoir 1 est inférieur à un seuil minimum prédéterminé.

L'unité de prétraitement 4 est par exemple constituée d'un assemblage d'éléments tels que des filtres adaptés à la qualité physico-chimique de l'eau à traiter.

Cette unité comprend de préférence un élément de filtration de sédiments dont les particules sont de taille supérieure à 5 µm, pour éliminer les matières en suspension et les éléments précipités, un élément à charbon activé sous la forme de granulés ou d'un bloc compacté, pour éliminer les polluants de type pesticides, composés chlorés, matières organiques, et un élément complexant par exemple à base de polyphosphate de sodium ou de silicopolyphosphate de sodium. Ces éléments peuvent être conditionnés sous la forme d'une cartouche munie d'orifices d'entrée et de sortie pour permettre la circulation de l'eau à traiter.

Selon l'invention, l'unité d'électrodialyse 5 permet d'éliminer de l'eau à traiter, les espèces ioniques en excédent, telles que les nitrates, phosphates, le calcium, les carbonates, etc. A cet effet, elle est de type multicellulaire, dont l'organisation interne est adaptée à la purification de l'eau à usage domestique, du type "eau de ville", sans qu'il soit nécessaire de faire subir à cette eau un traitement préalable d'adoucissement.

L'organe de commande 9 comprend un transformateur de tension, un redresseur de courant pour alimenter notamment l'unité d'électrodialyse, un circuit de commande et de contrôle de la pompe et un ensemble de voyants lumineux indiquant l'état du dispositif.

Ce dispositif est avantageusement logé dans un boîtier analogue à celui d'un petit appareil électroménager, la cruche 6 de réception de l'eau traitée étant amovible.

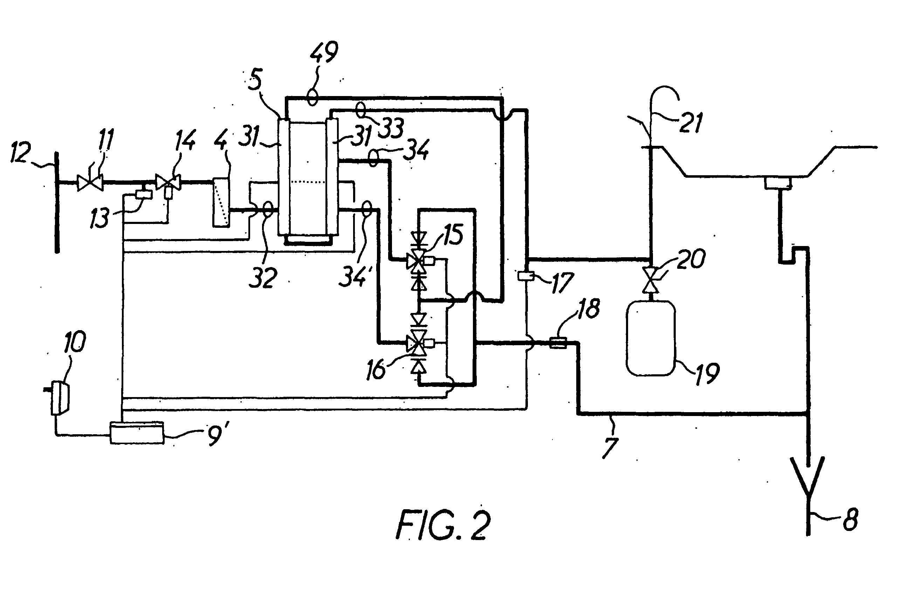

La figure 2 représente un dispositif selon l'invention qui est conçu pour être raccordé directement sur un circuit de distribution d'eau sous pression et fournir à la demande de l'eau traitée sous pression, d'une manière automatique.
Sur cette figure, le dispositif de purification comprend une unité d'électrodialyse 5 qui peut être associée à une unité de prétraitement 4, cette unité étant alimentée en eau à traiter par le circuit de distribution d'eau 12, par l'intermédiaire d'une vanne d'arrêt 11 et d'une électrovanne 14. La pression de l'eau entre la vanne d'arrêt 11 et l'électrovanne 14 est détectée par un détecteur de pression 13 basse pression. L'unité d'électrodialyse 5 comprend deux sorties 34, 34', à savoir une sortie d'eau traitée et une sortie d'eau saumâtre, lesquelles sont raccordées à un ensemble à double électrovannes deux voies 15, 16. En sortie de cet ensemble, on trouve une conduite d'évacuation 7 de l'eau saumâtre qui est reliée au circuit d'évacuation des eaux usées 8, et une conduite pour la fourniture de l'eau traitée à un robinet de puisage 21 et, par l'intermédiaire d'une vanne d'arrêt 20, à un réservoir de stockage 19 sous pression. La pression dans le circuit d'eau traitée est détectée par un détecteur de pression 17.

L'ensemble des électrovannes 14, 15, 16 est commandé par un organe de commande 9' en fonction des indications fournies par les détecteurs 13, 17. L'organe de commande 9' est relié au réseau de distribution électrique par l'intermédiaire d'une prise de raccordement 10 et alimente en tension continue notamment l'unité d'électrodialyse 5.

Sur la conduite de l'eau saumâtre, se trouve un élément de limitation de débit 18 pour limiter le débit d'eau saumâtre, notamment lorsque que la pression de l'eau du circuit augmente au fur et à mesure que le réservoir 19 se remplit.

Le détecteur de pression 17 sur la conduite d'eau traitée permet de détecter que le réservoir est plein et que le robinet 21 est fermé, pour commander la fermeture de l'électrovanne 14, et la coupure de l'alimentation électrique de l'unité d'électrodialyse 5. Un changement d'état de ce détecteur de pression déclenche la commande inverse d'ouverture de l'électrovanne 14 et de mise sous tension de l'unité d'électrodialyse.

Lorsqu'on actionne le robinet 21, l'eau traitée qui n'est pas consommée tombe dans un évier raccordé au réseau d'évacuation des eaux usées 8.

Tous les éléments de ce dispositif sont rassemblés dans un boîtier dont la face arrière est équipée des passages et raccords nécessaires à l'alimentation électrique et en eau, et à l'évacuation de l'eau traitée et de la saumure. Les faces avant et/ou de dessus de ce boîtier sont équipées d'organes de contrôle et de signalisation de fonctionnement.

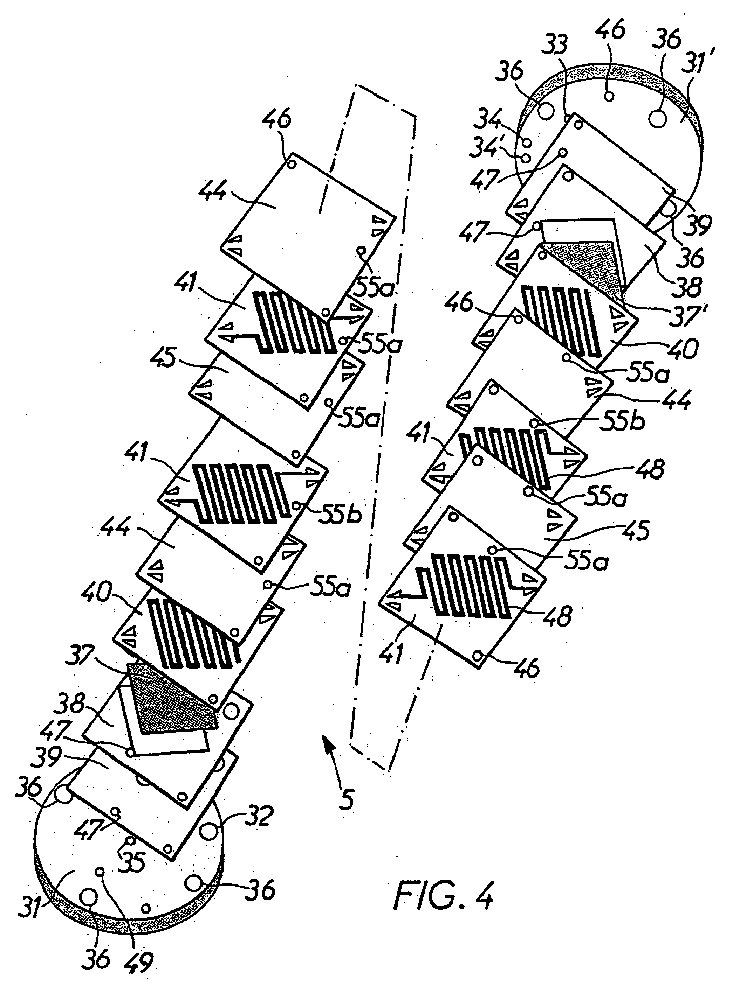

La figure 3 représente une variante simplifiée du dispositif représenté sur la figure 2. Le dispositif représenté sur cette figure est sensiblement identique à celui représenté sur la figure 3, mis à part que la conduite d'eau traitée est reliée à un réservoir 19' à la pression atmosphérique, la sortie de ce réservoir étant reliée à une vanne 28 de prise d'eau traitée. Le niveau d'eau du réservoir 19' est mesuré par un détecteur 27 de niveau d'eau, relié à un organe de commande 9" qui commande l'ouverture de l'électrovanne 14 et mise sous tension électrique de l'unité d'électrodialyse lorsque le niveau d'eau détecté par le détecteur 27 se trouve en dessous d'un certain seuil minimum prédéterminé, et exécute la commande inverse lorsque ce niveau se trouve au dessus d'un certain seuil maximum prédéterminé.

Sur la figure 4, l'unité d'électrodialyse 5 comprend un ou plusieurs étages de traitement, constitués d'un empilement de couches comprenant :
- des brides externes 31, 31' comportant respectivement des orifices d'entrée 32 et de sorties 33, 34 de l'eau, et de passage 35 des liaisons électriques d'alimentation des électrodes en courant continu,
- deux électrodes 37, 37' réalisées dans une matière non corrodable, qui sont chacune insérées dans un cadre d'électrode 38 respectif, comportant des orifices 47 pour la circulation des fluides dans l'unité d'électrodialyse,
- des membranes 44, 45 échangeuses d'ions mono ou plurivalents, possédant des perforations pour permettre la circulation des fluides entre les différentes couches, les membranes 44 étant sélectives des cations ou ions positifs et les membranes 45 des anions ou ions négatifs,
- des cadres séparateurs 40 d'électrode et de membrane, ayant un profil apte à assurer la distribution de l'eau exclusivement à la surface des électrodes 37, 37' et des membranes 44, et
- des cadres séparateurs 41 de membranes ayant un profil apte à assurer la distribution de l'eau à la surface des membranes 44, 45, la position de ces cadres assurant la distribution de l'eau entre le circuit de circulation d'eau à traiter, et les circuits où sont recueillies respectivement l'eau purifiée et l'eau saumâtre.

Les brides externes 31, 31' sont par exemple constituées de plaques de polymère obtenues par moulage ou usinage. Elles comportent en outre des perçages latéraux 36 qui permettent le passage d'éléments de contention ou de serrage, des perçages 46 qui permettent le centrage des différents éléments de l'étage de traitement lors de son assemblage, des perçages 47 qui permettent l'alimentation et l'extraction des électrolytes. Les brides sont fixées l'une à l'autre de manière à maintenir entre elles les différentes couches constituant l'unité d'électrodialyse, ces couches étant suffisamment serrées les unes contre les autres pour obtenir une étanchéité entre elles suffisante.

Les électrodes 37, 37' par exemple de forme rectangulaire et d'épaisseur de quelques millimètres, sont constituées d'une feuille métallique revêtue de métal noble. De préférence, elles sont constituées de titane dont la face de travail est revêtue d'oxydes de métaux précieux, ou de métaux précieux tels que le platine
ou l'or. Lorsque l'unité d'électrodialyse est en fonctionnement, les électrodes sont polarisées par du courant continu.

Les cadres d'électrode 38 dans lesquels les électrodes 37, 37' sont respectivement insérées sont réalisés en polymère ou en élastomère et présentent la même épaisseur que les électrodes. La face arrière de l'ensemble électrode 37 ou 37' - cadre d'électrode 38 est revêtue d'un joint 39 de face arrière d'électrode, formé d'un film en polymère élastique, percé en son centre pour laisser apparaître une partie de la face arrière de l'électrode 37, 37' et comportant d'autres perçages nécessaires au passage des électrolytes.

L'alimentation en courant continu des électrodes 37 est réalisée au moyen d'un fil de cuivre revêtu d'une gaine et dénudé à son extrémité, laquelle extrémité est en contact direct avec l'électrode. Afin d'obtenir les étanchéités et isolations nécessaires, la gaine du fil de cuivre est soudée ou collée dans l'orifice 35 de la bride 31, 31' qu'il traverse.

Afin d'assurer la distribution de l'eau dans les canaux définis par les cadres séparateurs 40, 41 sur les surfaces d'échange des membranes 44, 45, les cadres séparateurs, les membranes, les électrodes 37 et les brides sont empilés suivant les séquences suivantes.

Dans le cas où l'unité d'électrodialyse comporte un seul étage de traitement, elle est constituée de la séquence de couches suivante :
Bride - Joint - CE/E1 - CSE - MC - CS1 - MC - CS2 - MC - CS1 - MC - n × (CS2 - MA - CS1 - MC) - CS2 - MC - CS1 - MC - CS2 - MC - CSE - E1/CE - Joint -Bride
   dans laquelle :
   CE/E1 ou E1/CE est un assemblage du cadre 38 et de l'électrode 37,
   CSE est un cadre séparateur 40,
   MC est une membrane échangeuse de cations 44,
   CS1 est un cadre séparateur 41 en position 1,
   CS2 est un cadre séparateur 41 en position 2,
   MA est une membrane échangeuse d'anions 45, et
   n est une valeur entière par exemple comprise entre 1 et 150 pour un appareil domestique ou collectif.

Les cadres séparateurs 41 sont disposés dans deux positions différentes CS1 et CS2, de manière à définir des canaux de transfert des fluides entre les différentes couches correspondant à la circulation des fluides souhaitée dans l'unité d'électrodialyse.

Dans le cas où l'unité d'électrodialyse comporte deux étages de traitement, elle est constituée de la séquence de couches suivante :
Bride - Joint - CE/E1 - CSE - MC - CS1- MC - CS2 - MC - CS1 - MC - n × (CS2 - MA - CS1 - MC) - Ms - n × (CS2 - MA - CS1 - MC) - CS2 - MC - CS1 - MC - CS2 - MC - CSE - E1/CE - Joint -Bride
   dans laquelle Ms est une membrane échangeuse de partition des étages qui diffère des membranes 44, 45 uniquement dans la position et la présence des perçages de passage des fluides à travers les différentes couches de l'unité d'électrodialyse. En particulier, la membrane Ms permet d'obtenir une connexion en série, au lieu d'une connexion en parallèle des deux étages.

Il est à noter que les séquences proches des électrodes sont fixes, quelle que soit la valeur de n.

Il est à noter que l'on a placé plusieurs membranes 44 échangéuses de cations MC successives à la suite des électrodes avant de placer des membranes 45 échangeuses d'anions MA. Cette disposition permet de limiter le risque de précipitations sur les membranes MA, qui est plus important au voisinage des électrodes. Bien entendu, dans le cas où l'eau à traiter est moins dure ou moins alcaline, cette disposition n'est pas nécessaire.

Les cadres séparateurs 40, 41 sont réalisés par des opérations de découpe et de conformage par estampage d'un matériau se présentant sous la forme de feuilles ou de films. Ces opérations de découpe et de conformage sont effectuées de manière à ce que le cadre séparateur définisse entre deux membranes échangeuses 44, 45 adjacentes, un canal étroit 48, 48', 48a, conformé de manière à assurer une irrigation régulière (à vitesse constante) par l'eau de majeure partie de la portion centrale des surfaces des membranes.
Compte tenu des caractéristiques physico-chimiques des eaux à traiter, les cadres séparateurs 40, 41 présentent une très faible épaisseur, inférieure à 1 mm, de préférence de l'ordre de 0,1 à 0,6 mm, de manière à minimiser la chute ohmique entre les électrodes 37, et donc la consommation d'énergie. Cette caractéristique permet également de favoriser les apports de matière à la surface des membranes échangeuses d'ions, et donc d'augmenter les rendements spécifiques d'extraction ioniques des membranes.

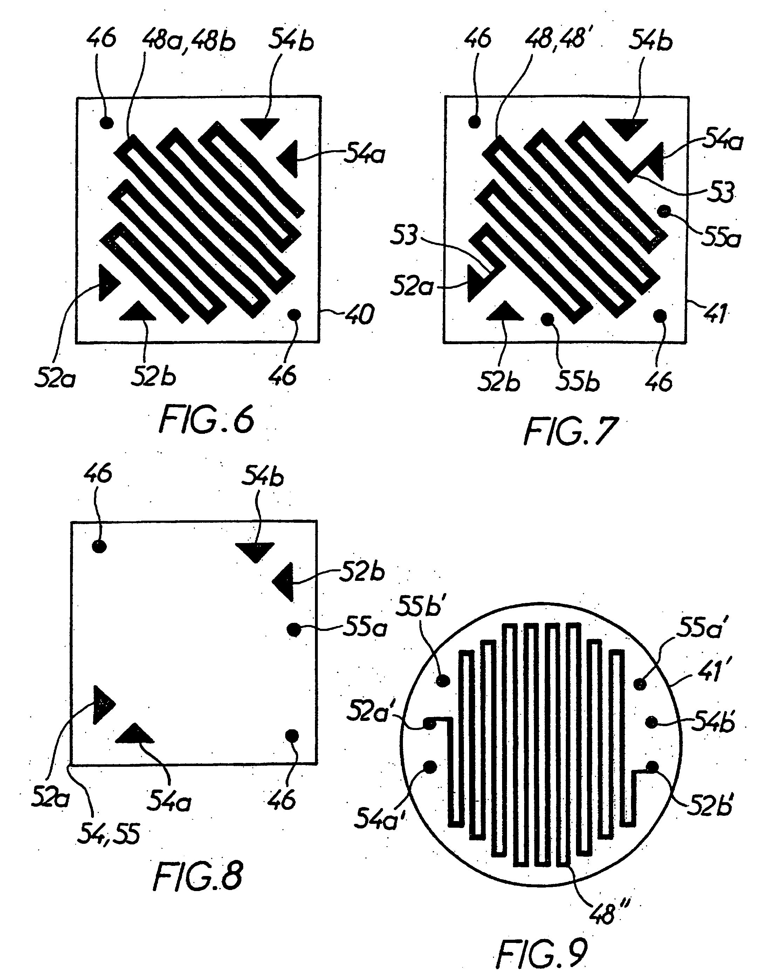

Sur les figures 6 et 7, les cadres séparateur 40, 41 présentent une forme carrée, le canal étroit 48, 48', 48a ayant une forme sinueuse de manière à occuper la majeure partie de la portion centrale de la surface du cadre séparateur.

Sur la figure 7 montrant un cadre séparateur 41, chacune des deux extrémités du canal 48, 48' débouche par une section de liaison 53 plus étroite sur des orifices d'alimentation 52a et d'évacuation 52b, qui communiquent avec les entrées 32 et sorties de l'eau 33, 34, 34' de l'unité d'électrodialyse. Le rôle de ces sections de liaison 53 plus étroites est de maintenir la planéité des membranes adjacentes 44, 45 dans la région des orifices d'alimentation 52a, 52b, et ainsi d'assurer l'étanchéité entre les couches à ce niveau.

Le cadre séparateur 41 comporte en outre deux perçages 54a, 54b permettant de définir respectivement deux autres canaux de transfert de fluides entre les couches de l'unité d'électrodialyse.

Il est à noter que pour des raisons de niveau de perte de charge, la présence des sections de liaison 53 n'est possible que dans le cas de faibles débits, correspondants à ceux qui sont requis dans les applications domestiques. Dans des applications où un débit plus important est requis, il est nécessaire de prévoir d'autres aménagements induisant des coûts supplémentaires.

Le cadre 41 comprend également deux perçages 55a, 55b également pour le passage des fluides entre les couches de l'unité d'électrodialyse, et deux perçages 46 permettant le centrage des différentes couches de l'unité d'électrodialyse lors de son montage. En fait, le cadre 41 est conçu de manière à pouvoir être utilisé dans la position montrée sur la figure 6 et dans la position retournée, un seul perçage 55a, 55b étant utilisé par chaque cadre pour le transfert de fluides entre les couches.

Les perçages 52a, 52b, 54a, 54b sont formés dans deux angles opposés du cadre et présentent une forme telle que la distance avec le bord de la membrane soit suffisante pour assurer l'étanchéité externe, tout en offrant une surface relativement importante sans limiter la surface d'échange définie par le canal 48, 48'.

Sur la figure 6, le cadre séparateur 40 comprend également des perçages 46, 52a, 54a, 52b, 54b disposés aux mêmes emplacements que sur le cadre 41, et un canal 48a, 48b, analogue à celui 48, 48' du cadre 41, mais qui ne communique pas avec les perçages 52a ou 54a, et 52b ou 54b, et dont les extrémités coïncident avec les emplacements des perçages 55a, 55b du cadre 41.

Typiquement, les canaux 48, 48', 48a, 48b des cadres 40, 41 présentent une largeur de quelques millimètres à 1 centimètre, et de préférence de l'ordre de 2,5 mm, de manière à assurer une bonne définition géométrique du canal, et éviter l'effondrement des membranes 44, 45 adjacentes, la largeur des sections plus étroites 53 des cadres 41 étant de l'ordre de 1 à 2 mm. La longueur du canal 48, 48', 48a, 48b peut varier de quelques centimètres à quelques mètres.

Sur la figure 8, les membranes 54, 55 comportent également des perçages 46, 52a, 54a, 52b, 54b et 55a, disposés aux mêmes emplacements que sur les cadres 40,41.

Alternativement, les différentes couches de l'unité d'électrodialyse peuvent être circulaires. Dans ce cas, les cadres séparateurs 41' peuvent être réalisés de la manière représentée sur la figure 9. Ce cadre comprend également une découpe en forme de serpentin 48" de manière à délimiter un canal sinueux avec les deux membranes adjacentes 44, 45. Comme dans le mode de réalisation précédent, il comporte des perçages 52a' et 52b' qui communiquent avec les extrémités de la découpe 48" pour l'alimentation et l'évacuation du fluide dans le canal délimité par la découpe, deux autres perçages 54a' et 54b' permettant définir un canal de transfert de fluides avec les autres couches de l'unité d'électrodialyse, et des perçages 55a' et 55b' permettant de définir encore un autre canal.

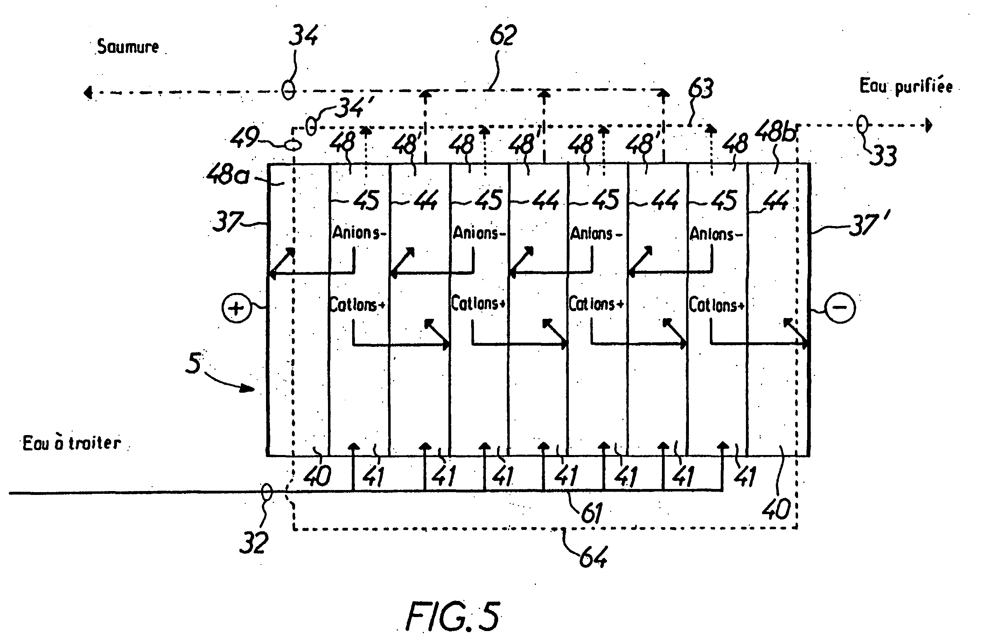

Comme montré d'une manière très schématique sur la figure 5, l'eau à traiter est introduite par l'orifice d'entrée 32 dans le canal 61 défini par les perçages 52a, 52b, 54a, 54b correspondants, formés dans les différentes couches de l'unité d'électrodialyse 5, pour se disperser dans les cadres séparateurs 41, entre les membranes 44, 45, mais pas dans les cadres séparateurs 40 d'électrode et de membrane.

Les perçages 52a, 52b, 54a, 54b réalisés dans les différentes couches de l'unité d'électrodialyse (membranes 44, 45 et cadres 40, 41) sont réalisés de manière à définir trois canaux 61, 62, 63 passant à travers les couches de l'unité d'électrodialyse, à savoir un canal 61 formé de deux perçages 52a, 52b ou 54a, 54b contigus, pour la distribution de l'eau à traiter dans les cadres séparateurs 41 de membranes, et deux canaux 62, 63 de récupération de l'eau traitée et de l'eau saumâtre en sortie des cadres séparateurs 41, le canal 62 étant relié aux sorties des canaux 48, par exemple d'ordre impair, et le canal 63 aux sorties des canaux 48', par exemple d'ordre pair (voir figure 5).

Lorsqu'un champ électrique continu est appliqué à l'eau à traiter présente dans les cadres 41 entre les électrodes 37, 37', les anions sont attirés par l'électrode positive 37 (située à gauche sur la figure), tandis que les cations sont attirés par l'électrode négative 37' (située à droite sur la figure). Durant ce double flux inverse d'ions et le passage de l'eau dans les canaux 48, 48' formés par les cadres séparateurs 41, les ions se retrouvent piégés dans les canaux 48' des cadres séparateurs 41 situés entre les paires de membranes échangeuses d'ions de signes opposés, adjacentes, ces paires étant constituées d'une membrane 44 échangeuse de cations, située du côté de l'électrode 37 et d'une membrane 45 échangeuse d'anions, située du côté de l'électrode 37'. En contre partie, l'eau dans les canaux 48 des cadres séparateurs 41 entre les paires de membranes adjacentes, constituées d'une membrane 45 échangeuse d'anions, située du côté de l'électrode 37 et d'une membrane 44 échangeuse de cations, située du côté de l'électrode 37', se retrouve purifiée à la sortie de ces canaux. L'eau saumâtre est donc récupérée en sortie des canaux 48' et évacuée vers la sortie 34 par le canal 62, et l'eau purifiée en sortie des canaux 48 est recueillie dans le canal 63.

Selon une particularité de l'invention, les différentes couches (cadres séparateurs 40, 41 et membranes 44, 45) comprennent chacune un quatrième perçage 55a, 55b permettant de définir un quatrième canal 64 traversant ces couches qui débouche à ses deux extrémités respectivement dans les canaux 48a, 48b des deux cadres séparateurs 40 d'électrode et de membrane, le canal 63 étant relié au canal 48a du cadre séparateur 40 d'électrode et de membrane, situé contre l'anode 37, et la sortie du canal 48b du cadre séparateur 40 situé contre la l'électrode 37' étant reliée à la sortie d'eau purifiée 33 de l'unité d'électrodialyse.

De cette manière, l'eau purifiée passe sur les deux électrodes 37, 37' avant d'être envoyée vers la sortie 33 de l'unité d'électrodialyse.

Le passage de l'eau purifiée sur l'électrode négative 37' permet de réduire les phénomènes de précipitation sur cette électrode, dus notamment à la très faible acidité de l'eau environnante. En effet, le passage de l'eau purifiée qui est plus acide ou moins alcaline permet d'augmenter l'acidité de l'eau au voisinage de l'électrode. On évite ainsi un prétraitement d'adoucissement de l'eau.

Par ailleurs, le passage de l'eau purifiée sur l'électrode positive 37 permet de placer cette eau dans un environnement oxydant à effet bactéricide, résultant de la proximité de cette électrode. On évite ainsi un post traitement antibactérien.

Selon une autre particularité de l'invention, la polarité du courant continu, appliquée aux électrodes est inversée périodiquement, à une fréquence régulière appropriée. Cette disposition permet d'éviter l'accumulation par précipitations successives de matières insolubles sur l'électrode polarisée négativement et sur les membranes.

Les alternances positives et négatives ont de préférence la même durée qui est adaptée à la qualité de l'eau à traiter, et principalement à sa dureté calcique et magnésienne. Cette durée est de préférence comprise entre quelques minutes et quelques dizaines de minutes, et de préférence entre deux et dix minutes. De la même manière, les quantités de courant continu délivrées au système durant les alternances sont égales. Ces valeurs de durée et de quantité de courant sont déterminées de manière à obtenir un compromis entre des durées /quantités de courant trop faibles qui rendent difficiles la séparation ionique de l'eau purifiée, et des durée/quantité de courant trop longues qui induisent la formation par précipitation sur les électrodes d'une couche de matière relativement épaisse qui aura tendance à se détacher par plaques lors de l'alternance suivante, et donc à boucher les canaux, notamment 48, 48' de l'unité l'électrodialyse.

Avantageusement, la précision de l'équilibre des durées des alternances et de celles des quantités de courant continu délivrées au système sont inférieures à ±1 %, de préférence inférieure à ±0,05 %.

Cet équilibrage de la durée des alternances positives et négatives est par exemple effectué par un compteur numérique très précis qui n'effectue le comptage de la durée des alternances que pendant les périodes où l'unité d'électrodialyse est mise sous tension, en tenant compte de la durée de l'alternance commencée au moment de la mise hors tension précédente de l'unité d'électrodialyse.

Par ailleurs, l'équilibre des quantités de courant continu délivrées au système durant les alternances de polarité requiert l'utilisation d'une alimentation en courant continu, délivrant une intensité constante, cette intensité pouvant être réglée en fonction des caractéristiques de l'eau à traiter et du débit traité.

Cette inversion de polarité implique l'utilisation de la double électrovanne 15, 16, à deux voies, apparaissant sur les figures 2 et 3, que l'on relie à l'entrée 49 du canal 48a, et aux sorties 34, 34' des canaux 62 et 63 montrés sur la figure 5.

Suivant la polarité appliquée aux électrodes, l'eau purifiée se trouve soit à la sortie 34, soit à la sortie 34'. Si l'eau purifiée est en sortie 34, l'électrovanne 15 est commandée par l'organe de commande 9', 9" de manière à envoyer l'eau purifiée appliquée en entrée dans la conduite de jonction entre les deux électrovannes 15, 16, laquelle est reliée à l'entrée 49 de l'unité d'électrodialyse 5. Parallèlement, l'eau saumâtre arrive par la sortie 34' sur l'électrovanne 16 qui est commandée par l'organe de commande 9', 9" de manière à envoyer l'eau saumâtre vers le circuit d'évacuation des eaux usées 8. Lors de l'alternance suivante, l'eau purifiée se trouve en sortie 34' et arrive sur l'électrovanne 16 qui est commandée de manière à envoyer l'eau purifiée sur l'entrée 49, tandis que l'eau saumâtre qui se trouve en sortie 34 est envoyée par l'électrovanne 15 vers le circuit d'évacuation 8 des eaux usées.

Avantageusement, on prévoit un léger décalage entre les instants de commande des électrovannes 15 et 16 de manière à purger le circuit dans lequel l'eau saumâtre vient de passer, et par lequel va transiter l'eau purifiée.

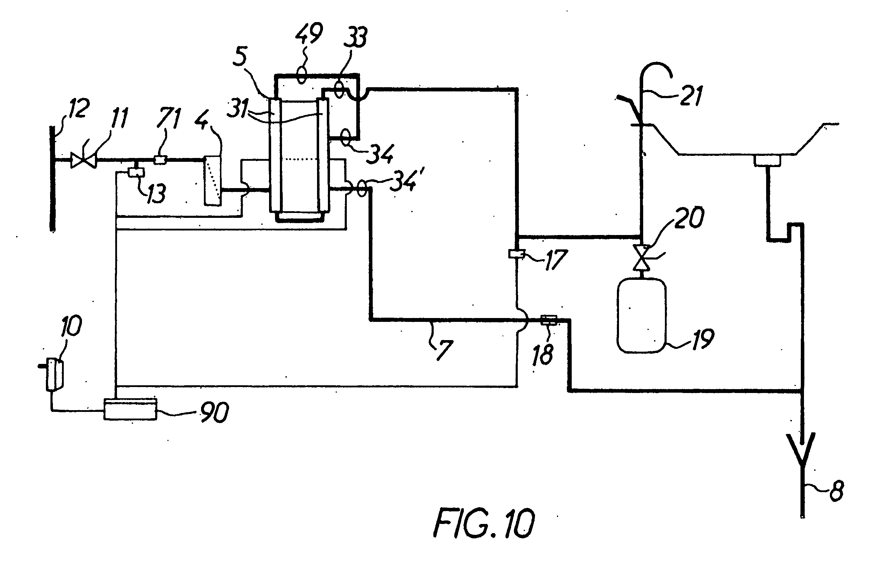

Bien entendu, l'inversion de polarité des électrodes 37, 37' de l'unité d'électrodialyse n'est pas nécessaire si l'eau à traiter est très peu dure ou est préalablement adoucie. Dans ce cas, le dispositif représenté sur la figure 2 peut être simplifié de la manière représentée sur la figure 10. Sur cette figure, la double électrovanne 15, 16 a été supprimée. La sortie 34' est reliée directement au circuit d'évacuation 8 des eaux usées, tandis que la sortie 34 est rebouclée directement sur l'entrée 49. Dans le circuit en amont du filtre 4, on peut également remplacer l'électrovanne 14 par un régulateur de débit 71. L'ensemble du dispositif est commandé et alimenté en énergie électrique par un organe de commande 90.

De même, dans le cas du dispositif représenté sur la figure 1, on peut prévoir d'effectuer un nettoyage / détartrage périodique à l'aide d'une dose d'un agent chimique acide alimentaire introduit dans le réservoir 1.

## Revendications

1. Dispositif de purification de l'eau à usage domestique ou collectif, ce dispositif comportant une unité d'électrodialyse (5) comprenant :
- deux électrodes (37, 37') planes disposées en regard l'une de l'autre, qui sont soumises à une tension continue pour générer entre elles un champ électrique continu,
- une pluralité de membranes (44, 45) échangeuses d'ions disposées entre les électrodes, les unes (44) étant sélectives des ions positifs, et les autres des ions négatifs (45), et
- une pluralité de cadres séparateurs (41) de membranes, disposés chacun entre deux membranes (44, 45) échangeuses d'ions adjacentes, et permettant le passage de l'eau à traiter sur la surface de ces deux membranes,
- deux cadres séparateurs (40) d'électrode et de membrane, disposés respectivement entre les deux électrodes (37, 37') et les membranes échangeuses (44) d'ions adjacentes, et permettant le passage de l'eau le long des électrodes,
- une conduite (61) de répartition de l'eau à traiter dans les cadres séparateurs (41), et deux conduites (62, 63) respectives d'extraction d'eau saumâtre et d'eau purifiée des cadres séparateurs,
- des moyens pour envoyer l'eau à traiter exclusivement dans les cadres séparateurs (41) entre deux membranes échangeuses d'ions,
**caractérisé en ce que** l'unité d'électrodialyse (5) comprend des moyens pour envoyer l'eau purifiée de la conduite d'extraction d'eau purifiée dans les cadres séparateurs (40) d'électrode et de membrane, avant de l'envoyer en sortie (33) de l'unité d'électrodialyse.

2. Dispositif selon la revendication 1,
**caractérisé en ce qu'**il comprend des moyens (9', 9") pour inverser la polarité appliquée aux électrodes (37, 37'), et pour commander l'inversion de polarité d'une manière périodique, de manière à ce que les durées respectives des alternances de polarisation positive et des alternances de polarisation négative soient égales, et/ou de manière à ce que les quantités de courant continu délivrées au système durant chaque alternance soient égales, et des moyens d'électrovannes (15, 16) commutés à chaque alternance pour orienter l'eau saumâtre extraite vers la sortie (34) d'eau saumâtre de l'unité d'électrodialyse (5), et l'eau purifiée dans les cadres séparateurs (40) d'électrode et de membrane, puis vers la sortie (33) d'eau purifiée de l'unité d'électrodialyse.

3. Dispositif selon la revendication 2,
**caractérisé en ce que** la durée des alternances de polarité est comprise entre quelques minutes et quelques dizaines de minutes, de préférence entre deux et dix minutes.

4. Dispositif selon la revendication 2,
**caractérisé en ce que** l'égalité de la durée des alternances de polarité et/ou la quantité de courant continu délivrée au système sont obtenues avec une précision inférieure à ±1 %, de préférence inférieure à ±0,05 %.

5. Dispositif selon l'une des revendications précédentes,
**caractérisé en ce qu'**il comprend une unité de prétraitement (4) disposée en amont de l'unité d'électrodialyse (5), adaptée à la qualité physico-chimique de l'eau à traiter.

6. Dispositif selon l'une des revendications précédentes,
**caractérisé en ce qu'**il consiste en un petit appareil électroménager comprenant dans un boîtier, un réservoir (1) d'eau à traiter, à la pression atmosphérique, une pompe (3) reliée à la sortie du réservoir (1) pour envoyer l'eau à traiter vers l'unité d'électrodialyse (5), un réservoir d'eau purifiée (6), à la pression atmosphérique et relié à la sortie (33) d'eau purifiée de l'unité d'électrodialyse, et un organe (9) de commande et d'alimentation électrique pour commander la pompe (3) et l'unité d'électrodialyse (5) en fonction du niveau de l'eau à traiter présente dans le réservoir (1).

7. Dispositif selon la revendication 6,
**caractérisé en ce que** le réservoir d'eau purifiée (6) est amovible.

8. Dispositif selon l'une des revendications 1 à 5,
**caractérisé en ce que** l'unité d'électrodialyse (5) est reliée à un circuit (12) de distribution d'eau sous pression, par l'intermédiaire d'une électrovanne (14), la sortie (33) de l'eau purifiée de l'unité d'électrodialyse étant reliée à un réservoir (19) sous pression permettant de distribuer à la demande de l'eau sous pression, le dispositif comprenant un organe de commande (9') assurant la commande automatique de l'unité d'électrodialyse (5) en fonction de la pression détectée dans le circuit d'eau purifiée.

9. Dispositif selon l'une des revendications précédentes,
**caractérisé en ce que** chaque cadre séparateur (40, 41) présente la forme d'une plaque d'une épaisseur inférieure à 1 mm et comprenant une découpe sinueuse ayant la forme d'un serpentin, de manière à définir avec les membranes (44, 45), ou l'électrode (37, 37') et la membrane (44, 45), entre lesquelles il est maintenu, un canal (48) à l'entrée duquel l'eau à traiter est injectée, la forme de cette découpe étant telle qu'elle s'étend sur la majeure partie de la portion centrale du cadre séparateur.

10. Dispositif selon l'une des revendications précédentes,
**caractérisé en ce que** l'unité d'électrodialyse (5) comprend deux brides (31, 31') entre lesquelles sont serrées une pluralité de couches constituées successivement, en partant de chaque bride, d'une électrode (37, 37'), d'un cadre séparateur (40) d'électrode et de membrane, d'une membrane échangeuse (44) sélective des ions positifs, suivi d'une pluralité de cadres séparateur (41) de membranes, placés en alternance avec des membranes (44, 45), l'ensemble de ces couches étant munies de perçages disposés de manière à définir au moins trois canaux, à savoir un canal (61) de distribution de l'eau à traiter dans les cadres séparateurs de membranes (41), un canal (62) de récupération du fluide en sortie des cadres séparateurs de membranes (41) situés entre une membrane sélective des ions positifs dans une première direction perpendiculaire aux plans des électrodes, et une membrane sélective des ions négatifs dans une seconde direction opposée, et un canal (63) de récupération du fluide en sortie des cadres séparateurs de membranes (41) situés entre une membrane sélective des ions négatifs dans la première direction, et une membrane sélective des ions positifs dans la seconde direction.

11. Dispositif selon la revendication 10,
**caractérisé en ce que** l'ensemble des couches de l'unité d'électrodialyse (5) situées entre les brides (31, 31') comprennent en outre des perçages (55a, 55b) disposés de manière à définir un quatrième canal (64) permettant de relier entre eux les deux cadres séparateurs (40) d'électrode et de membrane.

## Patentansprüche

1. Vorrichtung zur Reinigung von Haushalts- und öffentlichem Brauchwasser mit einer Elektrodialyseeinheit (5), die folgendes umfasst:
- zwei Elekroden (37, 37'), die gegenüber voneinander angeordnet sind und an denen eine Gleichspannung anliegt, um zwischen ihnen ein elektrisches Gleichfeld zu erzeugen,
- eine Vielzahl von Ionentauschermembranen (44, 45), die zwischen den Elektroden angeordnet sind, wobei die einen (44) für positive Ionen selektiv und die anderen für negative Ionen (45) selektiv sind,
- eine Vielzahl von Membrantrennrahmen (41), die jeweils zwischen zwei benachbarten Ionentauschermembranen (44, 45) angeordnet sind und den Durchtritt von aufzubereitendem Wasser auf die Oberfläche dieser zwei Membranen gestattet,
- zwei Elektroden/Membran-Trennrahmen (40), die jeweils zwischen den zwei Elektroden (37, 37') und den benachbarten Ionentauschermembranen (44) angeordnet sind und den Durchtritt von Wasser entlang der Elektroden gestatten,
- eine Leitung (61) zur Abgabe des aufzubereitenden Wassers in den Trennrahmen (41) und zwei Leitungen (62, 63) jeweils zur Entnahme von salzangereichertem Wasser und gereinigtem Wasser aus den Trennrahmen,
- Mittel, um das aufzubereitende Wasser ausschließlich in die Trennrahmen (41) zwischen zwei Ionentauschermembranen zu leiten,
**dadurch gekennzeichnet, dass** die Elektrodialyseeinheit (5) Mittel umfasst, um das gereinigte Wasser aus der Entnahmeleitung für gereinigtes Wassers in die Elektroden/Membran-Trennrähmen (40) zu leiten, bevor es zum Ausgang (33) der Elektrodialyseeinheit geleitet wird.

2. Vorrichtung nach Anspruch 1, **dadurch gekennzeichnet, dass** sie Mittel (9, 9') umfasst, um die an die Elektroden (37, 37') angelegte Polarität umzukehren und um die Polaritätsumkehr periodisch so zu steuern, dass die jeweils abwechselnden Dauern der Halbperioden positiver Polarität und der Halbperioden negativer Polarität gleich sind und/oder dass die an das System während jeder Halbperiode abgegebenen Gleichstrommengen gleich sind, und Elektroventilmittel (15, 16), die bei jeder Halbperiode umgeschaltet werden, um das entnommene salzangereicherte Wasser zum Ausgang (34) für salzangereicherte Wasser der Elektrodialyseeinheit (5) und das gereinigte Wasser in den Elektroden/Membran-Trennrahmen (40) und dann zu dem Ausgang (33) für gereingtes Wasser der Elektrodialysevorrichtung zu lenken.

3. Vorrichtung nach Anspruch 2, **dadurch gekennzeichnet, dass** die Dauer der Polaritätshälbperioden zwischen einigen Minuten und einigen zehn Minuten und vorzugsweise zwischen zwei und zehn Minuten liegt.

4. Vorrichtung nach Anspruch 2, **dadurch gekennzeichnet, dass** die Gleichheit der Dauer der Polaritätshalbperioden und/oder der an das System gelieferten Gleichstrommenge mit einer Genauigkeit von kleiner als ±1% und vorzugsweise von kleiner als ±0,05% erhalten wird.

5. Vorrichtung nach einem der vorhergehenden Ansprüche,
**dadurch gekennzeichnet, dass** sie eine Voraufbereitungseinheit (4) umfasst, die stromaufwärts von der Elektrodialyseeinheit (5) angeordnet ist und an die physikalisch-chemische Qualität des aufzubereitenden Wassers angepasst ist.

6. Vorrichtung nach einem der vorhergehenden Ansprüche,
**dadurch gekennzeichnet, dass** sie aus einem kleinen Elektrohaushaltsgerät besteht, das in einem Gehäuse folgendes umfasst: einen Speicher (1) für aufzubereitendes Wasser bei Atmosphärendruck, eine mit dem Auslass des Speichers (1) verbundene Pumpe (3), um das aufzubereitende Wasser zu der Elektrodialyseeinheit (5) zu leiten, einen Speicher für gereinigtes Wasser (6) bei Atmosphärendruck, der mit dem Ausgang (33) für gereinigtes Wasser der Elektrodialyseeinheit verbunden ist, und ein Organ (9) zur Steuerung und elektrischen Versorgung, um die Pumpe (3) und die Elektrodialyseeinheit (5) in Abhängigkeit von dem in dem Speicher (1) vorhandenen Pegel des aufzubereitenden Wassers zu steuern.

7. Vorrichtung nach Anspruch 6, **dadurch gekennzeichnet, dass** der Speicher für gereinigtes Wasser (6) abnehmbar ist.

8. Vorrichtung nach einem der Ansprüche 1 bis 5,
**dadurch gekennzeichnet, dass** die Elektrodialyseeinheit (5) über ein Elektroventil (14) mit einer Abgabeleitung (12) für Druckwasser verbunden ist, wobei der Ausgang (33) für gereinigtes Wasser der Elektrodialyseeinheit mit einem Druckspeicher (19) verbunden ist, der es gestattet, bei Bedarf Druckwasser abzugeben, wobei die Vorrichtung ein Steuerorgan (9') umfasst, das für die automatische Steuerung der Elektrodialyseeinheit (5) in Abhängigkeit von dem in der Leitung für gereingtes Wasser erfassten Druck sorgt.

9. Vorrichtung nach einem der vorhergehenden Ansprüche,
**dadurch gekennzeichnet, dass** jeder Trennrahmen (40, 41) die Form einer Platte mit einer Dicke kleiner als 1 mm aufweist, die einen sinusförmigen Ausschnitt in der Form einer Serpentine umfasst, um mit den Membranen (44, 45) oder der Elektrode (37, 37') und der Membran (45), zwischen denen sie gehalten wird, einen Kanal (48) zu begrenzen, an dessen Eingang das aufzubereitende Wasser injiziert wird, wobei die Form dieses Ausschnitts derart ist, dass er sich über den Großteil des Mittelteils des Trennrahmens erstreckt.

10. Vorrichtung nach einem der vorhergehenden Ansprüche, **dadurch gekennzeichnet, dass** die Elektrodialyseeinheit (5) zwei Flansche (31, 31') umfasst, zwischen denen eine Vielzahl von Schichten eingespannt sind, die, ausgehend von jedem Flansch, aufeinanderfolgend aus einer Elektrode (37, 37'), einem Elektroden/Membran-Trennrahmen (40), einer für positive Ionen selektiven Tauschermembran (44), gefolgt von einer Vielzahl von Membrantrennrahmen (41) bestehen, die abwechselnd mit Membranen (44, 45) angeordnet sind, wobei die Gesamtheit dieser Membranen mit Bohrungen versehen sind, die so angeordnet sind, dass sie zumindest drei Kanäle begrenzen, nämlich einen Kanal (61) zur Abgabe des aufzubereitenden Wassers in die Membrantrennrahmen (41), einen Kanal (62) zur Rückgewinnung des Fluids am Ausgang der Membranrahmen (41) die zwischen einer für positive Ionen in einer ersten, zur Elektrodenebene senkrechten Richtung selektiven Membran und einer für negative ionen in einer zweiten, entgegengesetzten Richtung selektiven Membran angeordnet sind, und einen Kanal (63) zur Rückgewinnung des Fluids am Ausgang der Membrantrennrahmen (41), die zwischen einer für negative Ionen in der ersten Richtung selektiven Membran und einer für positive Ionen in der zweiten Richtung selektiven Membran liegen.

11. Vorrichtung nach Anspruch 10, **dadurch gekennzeichnet, dass** die Gesamtheit der Schichten der Elektrodialyseeinheit (5), die zwischen den Flanschen (31, 31') liegen außerdem Bohrungen (55a, 55b) umfasst, die so angeordnet sind, dass ein vierter Kanal (64) begrenzt wird, der es gestattet, die zwei Trennrahmen (40) für Elektroden und Membranen untereinander zu verbinden.

## Claims

1. Device for purifying water for domestic and public usage, said device comprising an electrodialysis unit (5) including :
- two flat electrodes (37, 37') placed opposite each other and which are submitted to a d.c. voltage so as to generate betw een them a continuous electric field,
- a plurality of ion exchanger membranes (44, 45) placed between the electrodes, amongst which some (44) being positive ions and the others (45) negative ions, and
- a plurality of membrane separator frames (41), eac h placed between two adjacent ion exchanger membranes (44, 45) and allowing the passage of water along the surface of said two membranes,
- two electrode and membrane separator frames (40) placed respectively between the two electrodes (37, 37') and adjac ent ion exchanger membranes (44) and allowing the passage of water along said electrodes,
- a pipe (61) for distributing the water to be treated in the separator frames ° (41) and two respective pipes (62, 63) for extracting the brackish water and the purified water of the separator frames,
- means to send the water to be treated exclusively into the separator frames (41) between two ion exchanger membranes,
**characterised in that** the electrodialysis unit (5) comprises means for sending the purified water o f the purified water extraction pipe into the electrode and membrane separator frames (40) before sending it to the outlet (33) of the electrodialysis unit.

2. Device according to claim 1, **characterised in that** it comprises means (9', 9") to invert the polarity applied to the electrodes (37, 37') and to periodically control the inversion polarity so that the respective periods of the positive polarisation alternances and negative polarisation altemances are equal, and/or so that the amount of the d.c. current delivered to the system during each alternance are equal, and electrovalve means (15, 16) switched to each alternance so as to direct the extracted brackish water to the brackish water outlet (34) of the electrodialysis unit (5) and the purified water in the electrode and membrane separator frames (40) and then towards the purified water outlet (33) of the electrodialysis unit.

3. Device according to claim 2, **characterised in that** the duration of the polarity alternances is between several minutes and ten minutes and preferably between two and ten minutes.

4. Device according to claim 2, **characterised in that** the equality of duration of the polarity alternances and/or the quantity of the d.c. current delivered to the system is/are obtained with an ac curacy of less than ±1 % and preferably less than ±0.05%.

5. Device according to one of the preceding claims, **characterised in that** it includes a pre-treatment unit (4) placed upstream of the electrodialysis unit (5) and adapted to the physio-chemical quality of the water to be treated.

6. Device according to one of the preceding claims, **characterised in that** it consists of a small household device comprising a box, a tank (1) for the water to be treated at atmospheric pressure, a pump (3) connected to t he outlet of the tank (1) to send the water to be treated to the electrodialysis unit (5), a purified water tank (6) at atmospheric pressure connected to the purified water outlet (33) of the electrodialysis unit, and a control and electric supply element (9) for controlling the pump (3) and the electrodialysis unit (5) according to the level of the water to be treated present in the tank (1).

7. Device according to claim 6, **characterised in that** the purified water tank (6) is movable.

8. Device according to one of claims 1 to 5, **characterised in that** the electrodialysis unit (5) is connected to an under -pressure water distribution circuit (12) by means of an electrovalve (14), the outlet (33) of the purified water of the electrodialysis unit being connect ed to a an under-pressure tank (19) making it possible to distribute the water under pressure on demands, said device comprising a control element (9') automatically controlling the electrodialysis unit (5) according to the pressure detected in the purifie d water circuit.

9. Device according to one of the preceding claims, **characterised in that** each separator frame (40, 41) has the shape of a plate less than 1 mm thick and comprising a sinuous cut having the shape of a serpentine so as to define with the membranes (44,45), or the electrode (37, 37') and the membrane (44, 45) between which it is supported, a channel (48) at whose inlet the water to be treated is injected, the shape of said cut being such that it extends onto the major part of the central portion of the separator frame.

10. Device according to one of the preceding claims, **characterised in that** the electrodialysis unit (5) comprises two flanges (31, 31') between which a plurality of layers are squeezed successively constituted starting from ea ch flange an electrode (37, 37'), an electrode and membrane separator frame (40), a selective positive ion exchanger membrane (44), followed by a plurality of membrane separator frames (41 alternately placed with the membranes (44, 45), all these layers being provided with perforations arranged in such a way as to define at least three channels, namely a channel (61) for distributing the water to be treated in the membrane separator frames (41), a channel (62) for recovering the fluid at the outlet of the membrane separator frames (41) situated between a selected positive ion membrane in a first direction perpendicular to the planes of the electrodes, and a selected negative ion membrane in a second opposite direction, and a channel (63) for recovering the fluid at the outlet of the membrane separator frames (41) situated between a negative ion selective membrane in the first direction, and a positive ion selective membrane in the second direction.

11. Device according to claim 10, **characterised in that** al 1 the layers of the electrodialysis unit (5) situated between the flanges (31, 31') comprise in addition perforations (55a, 55b) placed so as to define a fourth channel (64) making it possible to connect between them the two electrode and membrane separato r frames (40).
